# EUROPEAN PATENT APPLICATION

(11) **EP 4 279 897 A2**
(43) Date of publication of application: **22.11.2023**
(21) Application number: 23173297.5
(22) Date of filing: 15.05.2023
(51) Int. Cl.: G01M 13/02

(54) **MICRO-ELECTRO-MECHANICAL SENSOR FOR MONITORING A MECHANICAL POWER TRANSMISSION DEVICE AND CORRESPONDING SENSORIZED MECHANICAL POWER TRANSMISSION DEVICE**

(30) Priority: 16.05.2022 IT 202200010067
(71) Applicant: Bonfiglioli S.p.A., 40012 Calderara di Reno (BO) (IT)
(72) Inventor: COMINETTI, Paolo, 40012 CALDERARA DI RENO (BO) (IT); BOSI, Federico, 40012 CALDERARA DI RENO (BO) (IT); BORGHINI, Riccardo, 40012 CALDERARA DI RENO (BO) (IT)
(74) Representative: Studio Torta S.p.A.

(57) **Abstract**

A micro-electro-mechanical sensor (1) is described, comprising, in an integrated manner: a detection structure (10), made in a semiconductor material die (11), designed to be externally coupled to a casing (2) of a mechanical power transmission device (4) to detect deformations thereof and generate a corresponding detection signal (Sᵣ); and an electronic circuit (12), operatively coupled to the detection structure (10) and implementing a driving stage (12a) designed to provide driving signals (S_{d}) for the detection structure (10) and a reading stage (12b) configured to receive and process the detection signal (Sᵣ) to generate an output signal (Sₒᵤₜ) correlated with a physical quantity for monitoring the operation of the mechanical power transmission device (4). In particular, the mechanical power transmission device (4) is one of a reduction gear, a gearmotor or a motor and said physical quantity is one or more of: load, mechanical torque, rotation speed.

## Description

### CROSS-REFERENCE TO RELATED APPLICATIONS

This patent application claims priority from Italian patent application no. 102022000010067 filed on May 16, 2022, the entire disclosure of which is incorporated herein by reference.

### TECHNICAL FILED

The present solution relates to a micro-electro-mechanical sensor, of the MEMS type, with high resolution for measuring surface micro-deformations.

In particular, by correlating the surface deformation with the physical quantity that generated it, in a mechanical power transmission device, the micro-electro-mechanical sensor allows monitoring of main physical quantities (for example, torque, speed, power) related to the operating performance of the power transmission device.

The present solution finds application for example for sensorization of reduction gears, motors, gearmotors and in general a generic mechanical power transmission device.

### BACKGROUND

The need is known, in various industrial fields, to monitor the operation of mechanical equipment, in particular of mechanical power transmission devices, such as reduction gears or gearmotors, for example for the purpose of predictive maintenance (PM) or monitoring of production processes.

At present, monitoring is generally achieved by vibrational analysis using vibrational accelerometer sensors.

These accelerometer sensors can only evaluate qualitative variations of the acquired signal and associate them with a possible degradation (operation anomaly or failure) of the monitored device, being however unable to monitor the operating conditions/performance of the device. Furthermore, such sensors can easily be influenced by possible perturbations external to the system and, in order to avoid this, significant complications in the architecture of a related monitoring system are necessary.

For example, as described in US 10,551,243 B2, a machine condition monitoring system may include a high-performance vibration sensor (for example, a piezoelectric accelerometer) to collect vibration data associated with the condition of the machine (for detecting anomalies or failures); and also a vibration sensor with reduced performance and lower energy consumption (for example, a MEMS device), to periodically collect vibration samples, which are processed to determine whether the machine is in an operating power-on state (and therefore avoid false detections associated with external vibrational conditions) .

The high-performance vibration sensor is activated to collect vibration data only when the machine is suitable for being subjected to monitoring (i.e., it is in the power-on condition).

In particular, in this monitoring system, the low-performance MEMS sensor is used only in order to detect vibrations indicative of the machine power-on condition, to consequently wake up the high-performance vibration sensor (and activate the associated monitoring of anomalies or failures).

An alternative method to the aforementioned vibrational analysis is to carry out the aforementioned monitoring by measuring in real time physical quantities relevant to the operation and operating performance of the mechanical power transmission devices, such as for example mechanical torque, axial and/or radial loads, speed. The processing of the measured quantities with the aid of specific processing algorithms can allow the performance trend to be evaluated over time, for example to identify potential problems.

However, some of these physical quantities are difficult to measure with low-cost and easily applicable detection devices at the current state of the art and this hinders the diffusion and effectiveness of such monitoring methods on a wider basis.

The load and torque on mechanical parts in industrial plants, for example, are valuable parameters for monitoring production processes, possibly in combination with a vibrational analysis, but are currently difficult and expensive to monitor, particularly in heavy industrial sectors, and consequently they are rarely used for this purpose.

In greater detail, known solutions for measuring load (i.e., a force to which a mechanical component is subjected) include load cells of various shapes or strain gauges.

Load cells generally require a "customization" of the solution for the type of application and for the load measurement range; it follows that a plurality of these sensors exist, with generally high costs as compared to the low production quantities. Load cell solution requires in many cases an integration into the product on which the load is to be measured, so it usually results in an "invasive" solution.

The strain gauge solution is mainly used in a laboratory environment and also requires a modification of the product to be measured, in particular due to the fact that, in order to achieve good measurement sensitivity, it is necessary to install the sensor in suitably "unloaded" areas, to allow an elastic deformation detectable by the sensor. Consequently, the application at the industrial production process level is expensive and not simple.

Known solutions for torque measurement (in particular of the torque transmitted by a rotating shaft inside a mechanical power transmission device, such as a reduction gear, a gearmotor or an electric motor) involve the use of an in-line torquemeter on the rotating shaft; a strain gauge on the same rotating shaft; a load cell or strain gauge on the torsion arm; the measurement of electrical parameters of the electric motor that drives the transmission.

The strain gauge solution is expensive and invasive, as it must be interposed in series to the shaft being measured. Furthermore, the sensor must be sized for the torque range to be measured and it is known that many models of torquemeters are not able to measure very high torques (of the order of even tens of thousands or even a million Nm, which are instead frequent ranges of use in the industrial field).

The load cell solution suffers from the same drawbacks discussed above for load measurements, but with the added complexity related to the fact that the installation on a rotating shaft implies that the detected signals and the power supply must be transmitted to an external receiver/amplifier.

The solution which involves measuring the electrical parameters of the electric motor is possible only if the motor is powered by an inverter, whereas in many situations the electric motors are powered directly from the mains without power devices for the associated control.

Known solutions for speed measurement include various types of measurement sensors, some even quite inexpensive, all however requiring an interface with the rotating shaft. Therefore, also in this case an "invasive" intervention on the component to be measured is necessary. Furthermore, none of the existing speed sensors is able to provide information also for measuring the load or torque, or useful for diagnosing the operating status of the mechanical components being measured.

Essentially, from what has been reported it is clear that the implementation of solutions for monitoring the operation and in particular the performance of mechanical components in industrial plants, such as of mechanical power transmission devices, in particular reduction gears, gearmotors or electric motors, generally requires the installation of "invasive" sensors, requiring specific customization and relatively high costs (which increase in particular with the increase in the value of the physical quantities to be measured).

The need is therefore certainly felt in the field to provide detection solutions at low cost and easy to install for the real-time monitoring of physical quantities (in particular, load, torque and speed), allowing, for example, the implementation of predictive maintenance systems and prognostic and process monitoring.

### SUMMARY

The aim of the present solution is in general to provide an answer to the aforementioned need.

According to the present solution, therefore, a micro-electro-mechanical sensor for monitoring a mechanical power transmission device and a corresponding sensorized mechanical power transmission device are provided, as described in the appended claims.

### BRIEF DESCRIPTION OF THE DRAWINGS

For a better understanding of the present solution, preferred embodiments thereof are now described, by way of non-limiting example and with reference to the accompanying drawings, in which:
- Figure 1 schematically shows a mechanical power transmission device sensorized by a micro-electro-mechanical sensor, according to one aspect of the present solution;
- Figure 2 is an overall schematic block diagram of the micro-electro-mechanical sensor of Figure 1;
- Figure 3A is a schematic bottom perspective view of the micro-electro-mechanical sensor, according to an embodiment of the present solution;
- Figure 3B is a schematic top perspective view of the micro-electro-mechanical sensor;
- Figure 4 shows a possible layout of a detection structure for detecting deformations of the micro-electro-mechanical sensor, according to an embodiment of the present solution; and
- Figure 5 is an overall schematic block diagram of the micro-electro-mechanical sensor, according to a further aspect of the present solution.

### DESCRIPTION OF EMBODIMENTS

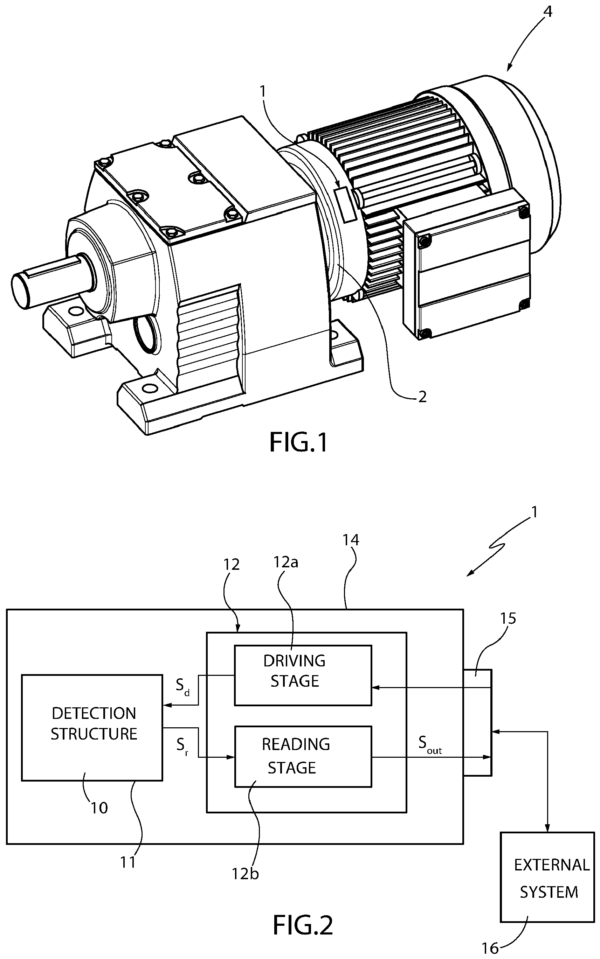

As schematically illustrated in Figure 1, one aspect of the present solution provides a micro-electro-mechanical sensor 1 designed to be externally coupled to a casing (case or housing) 2 of a mechanical component, in particular of a mechanical power transmission device 4, for example a reduction gear (here shown by way of mere example), a gearmotor or a motor. Advantageously, such coupling of the micro-electro-mechanical sensor 1 to the casing 2 does not involve any invasive impact or modification to the casing 2 or, in general, to the mechanical power transmission device 4.

In particular, the micro-electro-mechanical sensor 1 is a high sensitive (even several orders of magnitude higher than traditional measurement solutions) MEMS deformation sensor and is configured to detect deformations external to the casing 2 and provide an electrical output signal as a function of such deformations, that can be correlated to a physical quantity which has generated such deformations and which is associated with the operation and in particular with the performance of the mechanical power transmission device 4. Such physical quantity is, for example, one or more of: load, mechanical torque, rotation speed.

It is underlined that the aforementioned MEMS deformation sensor provides an indication of the actual performance of the device to which it is coupled (in terms of physical quantities associated with its operation). In particular, considering the deformation, "strain", ε in a dimensionless manner, as ΔL/L (where ΔL is the variation of a dimensional parameter, for example length L, following the deformation), the micro-electro-mechanical sensor 1 according to the present solution is capable of detecting deformations in the range 10⁻⁶ - 10⁻⁹ (i.e., nano-deformations, n-ε), contrary to traditional strain gauges which are not able to go beyond 10⁻⁶; this means that with the micro-electro-mechanical sensor 1 it is possible to obtain a sensitivity even 1000 times higher in detecting small deformations.

Advantageously, as will be discussed hereinafter, the same micro-electro-mechanical sensor 1 is configured to provide, based on the processing of the deformations detected at the casing 2, an electrical output signal which is correlated, after a suitable preliminary correlation operation, with any of the aforementioned physical quantities (for example, load, mechanical torque and rotation speed).

The positioning of the micro-electro-mechanical sensor 1 on the casing 2 of the mechanical power transmission device 4 can for example be determined by preliminary analysis with finite element method (FEM) aimed at identifying a best position in terms of detected signal-to-noise ratio (a position in which the material of the aforementioned casing 2 certainly has an elastic behaviour). The same analysis can also allow the detected deformation to be correlated with the value of the quantity to be detected (for example the applied load).

In general, in the case of reduction gears or transmission systems, the micro-electro-mechanical sensor 1 can be coupled to an output flange of the reduction gear, or to an interface flange between the reduction gear and a component actuated by the reduction gear.

The mechanical power transmission device 4 provided with the micro-electro-mechanical sensor 1 is consequently sensorized or "smart", being able to provide directly at the output, for example to an external monitoring system, information related to its operation and its operating performance, in terms of its relevant physical quantities, such as load, mechanical torque and rotation speed. It should be noted that, by virtue of the very high sensitivity of the micro-electro-mechanical sensor 1, it is possible to acquire the surface deformations of the mechanical power transmission device 4 associated with the physical quantities of interest; a traditional strain gauge would not be able to detect any deformation useful for measuring the same physical quantities of interest.

In greater detail, and as schematically shown in Figure 2, the micro-electro-mechanical sensor 1 comprises:
a MEMS detection structure 10 integrated in a semiconductor material die 11, in particular made of silicon, designed to be coupled to the aforementioned casing 2 of the mechanical power transmission device 4 to detect deformations; and
an electronic circuit 12, operatively coupled to the detection structure 10 and implementing a driving stage 12a designed to provide driving signals S_{d} for the same detection structure 10 and a reading stage 12b designed to receive and process detection signals Sᵣ provided by the detection structure 10 to generate the output signal, here denoted with Sₒᵤₜ, associated with the desired physical quantity indicative of the operation and in particular of the performance of the mechanical power transmission device 4.

The electronic circuit 12 can be made with discrete components on a corresponding flexible printed circuit (PCB flex - Printed Circuit Board flex) or in a more integrated manner using ASIC (Application Specific Integrated Circuit) semiconductors.

In particular, the reading stage 12b is capable of: processing the detection signal Sᵣ provided by the detection structure 10 as a function of the detected deformations; and generating the output signal Sₒᵤₜ, which can directly provide a measurement correlated with the physical quantity of interest (indicative of the performance of the mechanical power transmission device 4).

It should be noted that the solution of Figure 2 can also be implemented with more than one (MEMS) detection structure 10, for measuring the micro-deformations in several surface directions.

The micro-electro-mechanical sensor 1 comprises a package 14 which encloses within it the detection structure 10 and the electronic circuit 12, for example made of a thermoplastic moulded material. The aforementioned package 14 advantageously has very small dimensions, for example of about 10x10x5 mm, with a maximum volume occupation of a few cm³.

An electrical connector 15 is externally associated with the same package 14 and is designed to provide an electrical interface of the micro-electro-mechanical sensor 1 towards the external environment, for example towards an external electronic system 16 designed to receive the aforementioned output signal Sₒᵤₜ and to carry out further processing as a function of the same output signal Sₒᵤₜ for monitoring the operation of the mechanical power transmission device 4. The external electronic system 16 can also supply electrical power to the micro-electro-mechanical sensor 1 through the aforementioned electrical connector 15.

For example, such electrical connector 15 is an industrial connector with IP68 (or similar) degree of protection and of the multipolar type (preferably with a number of pins not exceeding 6-8).

As indicated above, the micro-electro-mechanical sensor 1 can find application for example on reduction gears, motors, gearmotors and mechanical power transmissions in general. For these applications, measurement may concern the following physical quantities (related to performance monitoring):
transmitted mechanical torque, by means of a measurement of deformation of the structure of the mechanical power transmission device 4;
axial and radial loads on rotating shafts of the mechanical power transmission device 4, by means of a measurement of deformation of supports or of the structure of the mechanical power transmission device 4; and
speed of the different stages of the reduction gear or transmission, by means of a frequency measurement of the deformation correlated with the pulsating load.

By way of example, in the case of an epicyclic reduction gear stage, measurement of the deformation made on the outside of the reduction gear case allows the load/torque and the rotation speed of the stage and therefore the transmitted power to be evaluated. In particular, measurement of the deformation can be correlated with the load/torque through a preliminary characterization operation, for example through FEM calculation or by means of similar experimental tests; speed measurement can be achieved by counting the load peaks per rotation generated by the passage of planetary gears with respect to a fixed point on the ring gear and then, on the basis of the number of planets, determining the output rotation speed of the planetary gear.

In a similar way and as a further example, also in the case of a parallel axis reduction gear, the measurement of the deformation made on the outside of the reduction gear case allows the load/torque and the rotation speed of the output stage and therefore the power transmitted by the reduction gear to be evaluated.

In a possible implementation, the reading stage 12b may internally comprise a memory for storing preliminary characterization information associated with the mechanical power transmission device 4, to implement the aforementioned correlation between the output signal Sₒᵤₜ and the quantity to be measured.

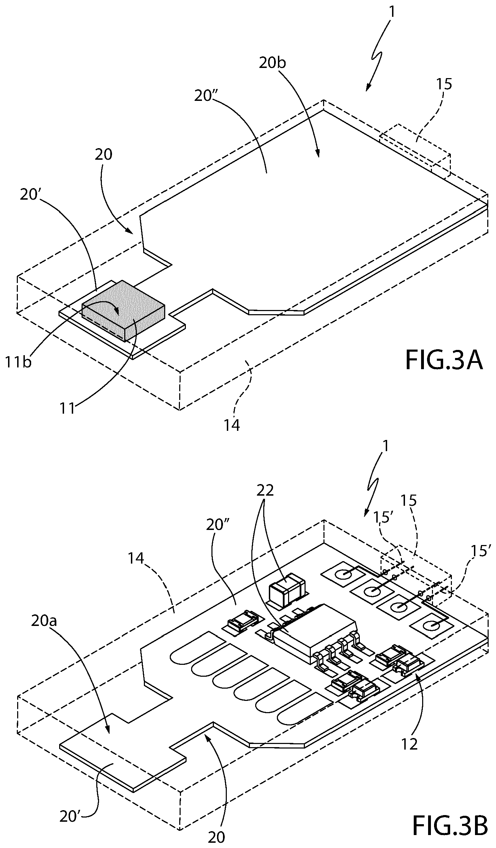

In greater detail, and with reference to Figures 3A and 3B, in a possible embodiment the micro-electro-mechanical sensor 1 comprises a substrate or support 20, which has an upper face 20a and a lower face 20b, the latter designed to be coupled, at least partially in contact, to the casing 2 of the mechanical power transmission device 4.

The die 11 of the detection structure 10 is coupled by means of a flip-chip coupling to the lower face 20b of the support 20, at a first distal portion 20' thereof.

Basically, a front face (hereinafter indicated with 11a) of the die 11, at which constituent elements of the detection structure 10 and corresponding electrical connection pads are made (as will be described in detail below, with reference to a possible implementation) is mechanically and electrically coupled (bonded) to the aforementioned lower face 20b of the support 20.

A rear face 11b (or base) of the aforementioned die 11, vertically opposite to the aforementioned front face 11a is instead designed to be coupled, for example by means of adhesive or other fixing means (for example by welding), to the casing 2 of the mechanical power transmission device 4. Such rear face 11b can be conveniently accessible from the outside of the package 14 of the micro-electro-mechanical sensor 1, for example being arranged flush with a relative outer surface of the same package 14.

Advantageously, at least part of the aforementioned support 20, in particular the aforementioned first distal portion 20', is made of a flexible material, for example Kapton, so as to facilitate coupling to the aforementioned casing and furthermore in such a way as to facilitate the detection of deformations by the detection structure 10.

The electronic circuit 12 of the micro-electro-mechanical sensor 1 is coupled to the upper face 20a of the support 20, at a second distal portion 20" thereof, longitudinally opposite to said first distal portion 20'; in particular, Figure 3B illustrates by way of example electronic components 22 of the aforementioned electronic circuit 12 (here having a discrete embodiment), electrically welded onto the aforementioned upper face 20a of the support 20. The aforementioned second distal portion 20" of the support 20 is in this case a printed circuit portion (advantageously, also made of flexible material).

In a manner not illustrated, suitable conductive tracks and paths for electrical connection are made in the same support 20, which therefore acts as an electrical coupling interface between the detection structure 10 and the associated electronic circuit 12.

As schematically illustrated in the same Figure 3B, terminals 15' of the electrical connector 15 are coupled to pads carried by the upper face 20a of the support 20, so as to allow, as indicated above, supplying of electrical power to the micro-electro-mechanical sensor 1 and additionally provision of the output signal Sₒᵤₜ outside the same micro-electro-mechanical sensor 1.

In a possible implementation, the detection structure 10 of the micro-electro-mechanical sensor 1 defines a MEMS flexural resonator integrated in the aforementioned die 11, with wafer level packaging.

For example, the detection structure 10 can be manufactured as described in detail in Belsito L. et al., "Fabrication of high-resolution strain sensors based on wafer-level vacuum packaged MEMS resonators", Sensors and Actuators A: Physical, Volume 239, 2016, Pages 90-101.

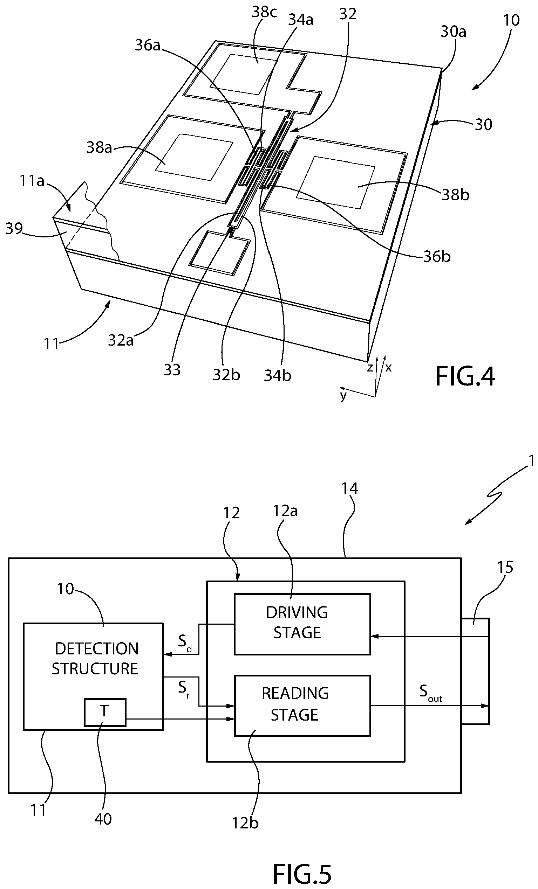

As shown in Figure 4, the detection structure 10 is in this case made of a substrate 30 of the aforementioned die 11, for example a SOI, Silicon On Insulator, substrate and comprises a resonator element 32, of the clamped-clamped type, defined by the processing of an active layer 30a of the same substrate 30.

The resonator element 32 comprises a first and a second arms 32a, 32b, constrained to each other at longitudinal ends thereof and separated along their longitudinal extension by a gap 33. Such first and second arms 32a, 32b have a high length along a first axis x of a horizontal plane xy, reduced width (along a second axis y of the same horizontal plane xy) and reduced thickness (along a vertical axis z, orthogonal to the horizontal plane xy), so as to yield in bending in the same horizontal plane xy.

The aforementioned first and second arms 32a, 32b are integrally coupled, at a central portion, to a first and, respectively, a second movable electrode 34a, 34b, which are arranged on the opposite side of the aforementioned gap 33 with respect to the second horizontal axis y.

The detection structure 10 further comprises a first and a second fixed electrode 36a, 36b, arranged in a position facing, at a separation distance, the first, respectively, the second movable electrodes 34a, 34b, so as to achieve a respective capacitive coupling.

A first and a second connection pads 38a, 38b are electrically coupled to the first, respectively, second fixed electrode 36a, 36b and furthermore a third connection pad 38c is electrically coupled to the aforementioned first and second movable electrodes 34a, 34b.

The detection structure 10 also comprises a cap 39 (herein schematically and partially shown) which seals the resonator element 32 at the top, creating a vacuum condition, so as to facilitate the operation thereof in resonance condition (without damping effects due to the presence of air). An upper surface of such cap 39 also constitutes the aforementioned front face 11a of the die 11.

During operation, through the aforementioned connection pads 38a-38c the driving signals S_{d} provided by the driving stage 12a of the electronic circuit 10 cause the resonator element 32 to be operated at the resonance frequency, for example with an oscillating counter-phase movement of the first and second arms 32a, 32b.

The deformations sensed by the detection structure 10 cause a modification of the aforementioned resonance frequency associated with the resonator element 32. In this case, an oscillation voltage of the resonator element 32 may constitute the detection signal Sᵣ provided by the detection structure 10 to the reading stage 12b of the electronic circuit 12, indicative of the deformations and on the basis of which the same electronic circuit 12 is designed to provide the output signal Sₒᵤₜ, correlated with the desired physical quantity associated with the operation and performance of the mechanical power transmission device 4.

A further aspect of the present solution provides for the possibility of compensating, internally to the micro-electro-mechanical sensor 1, a value of the total deformation measured by the micro-electro-mechanical sensor 1, eliminating a part, or amount, which is not related to the quantity to be measured (for example, load or torque), being due to a thermal deformation of the material following a change in temperature.

As schematically shown in Figure 5, a temperature transducer (T) 40 may in this case be made directly in the detection structure 10, inside the package 14, for example in the aforementioned die 11, so as to provide an indication of the temperature value during the detection operations.

By way of example, a dummy resonator element may be envisaged, i.e., specifically configured so as to be insensitive to deformations, but sensitive to temperature, so as to provide a compensation signal S_{c}, with which the reading stage 12b may be able to compensate the detection signal Sᵣ provided by the detection structure 10.

From what has been illustrated, the advantages that the present solution allows to achieve are evident.

In particular, such advantages include:
simplicity of installation, for example by coupling by means of adhesive the micro-electro-mechanical sensor 1 to the casing 2 of the mechanical power transmission device 4, without any invasive impact on the casing 2 or, in general, on the mechanical power transmission device 4;
very low installation and setup costs;
very small dimensions, so it can be easily installed even in critical situations with respect to space occupation;
easy integration into a standard production process, by virtue of the integrated electronics and the industrial-type connector.

Furthermore, a single sensor model is able to measure all physical quantities of interest for monitoring the performance of the associated device (for example, load, torque and speed), in particular without particular limitations on a corresponding "full scale" value. Therefore, after a suitable preliminary characterization, it is possible not only to measure different physical quantities, but also to cover all possible ranges of interest with a single model of micro-electro-mechanical sensor 1 (ranges which can be, in the example of a torque, of the order of hundreds of Nm but also of the order of millions of Nm, depending on the industrial application). The deformation of the material, on which the sensor is applied, in fact remains in an elasticity/deformation range (according to the most consolidated design rules) and such elasticity/deformation range is compatible with the measuring range of the MEMS sensor for the most common materials used in the design of power transmission devices.

The possible presence of algorithms for conditioning and processing the signals detected within the same micro-electro-mechanical sensor 1 also provides a monitoring solution that can be directly used by an end user.

Finally, it is clear that modifications and variations can be made to what is described and illustrated herein without thereby departing from the scope of the present solution, as defined in the appended claims.

For example, it should be noted that in a possible implementation, the micro-electro-mechanical sensor 1 could integrate on board, within the electronic circuit 12, a processing stage, for example involving artificial intelligence (AI), in order to autonomously execute processing algorithms, for example of machine learning, aimed at evaluating the performance and/or conditions of the mechanical power transmission device 4.

In particular, these processing algorithms could be aimed at diagnostics and predictive prognostics on the basis of the evolution of the deformation signal (and/or of the output signal) over time and therefore of the aforementioned physical quantities (it should be noted that such additional processing of diagnostics and predictive prognostics compared to the aforementioned deformation measurements may be available by virtue of the high sensitivity of the micro-electro-mechanical sensor 1).
Of course, the aforementioned algorithms and the aforementioned diagnostics and predictive prognostics analyses could, alternatively or in addition, be implemented externally to the micro-electro-mechanical sensor 1, by the aforementioned external electronic system 16.

Furthermore, in a possible implementation, the micro-electro-mechanical sensor 1 could integrate more than one detection structure 10, in particular more than one resonator element 32, for example in order to allow measurement of several physical quantities and/or compensation, for example in temperature, of the output signal Sₒᵤₜ.

It should also be noted that the solution described can be advantageously applied for monitoring any mechanical power transmission device 4, thus for sensorization of the same mechanical power transmission device 4.

The above solution can also be used for different applications, for example in the hydraulic field for detecting an internal pressure in a hydraulic device by monitoring deformations outside the same hydraulic device (in a manner substantially similar to what discussed above).

## Claims

1. A micro-electro-mechanical sensor (1) comprising, in an integrated manner:
a MEMS detection structure (10) made in a semiconductor material die (11), configured to be externally coupled to a casing (2) of a mechanical power transmission device (4) to detect deformations thereof and generate a corresponding detection signal (Sᵣ), said mechanical power transmission device (4) being one of a reduction gear, a gearmotor or a motor; and
an electronic circuit (12) operatively coupled to the detection structure (10) and implementing a driving stage (12a) designed to provide driving signals (S_{d}) for the detection structure (10) and a reading stage (12b) configured to receive and process said detection signal (Sᵣ) to generate an output signal (Sₒᵤₜ),
**characterized in that** said output signal (Sₒᵤₜ) is correlated with a physical quantity associated with said deformations and indicative of the operating performance of the mechanical power transmission device (4), said physical quantity being one or more of: load, mechanical torque, rotation speed.

2. The micro-electro-mechanical sensor according to claim 1, further comprising a temperature transducer (40) integrated in the detection structure (10), configured to provide a temperature indication; wherein said reading stage (12b) is configured to compensate, in said output signal (Sₒᵤₜ), for a part not related to the physical quantity to be measured and due to thermal deformation.

3. The micro-electro-mechanical sensor according to claim 1 or 2, wherein said reading stage (12b) is configured to store preliminary characterization information for correlation of said output signal (Sₒᵤₜ) with said physical quantity.

4. The micro-electro-mechanical sensor according to any one of the preceding claims, comprising: a package (14) and, within said package (14), a support (20) having a first portion (20'), to which said die (11) is coupled, and a second portion (20"), to which said electronic circuit (12) is coupled; wherein said support (20) defines electrical connection conductive paths, operating as electrical coupling interface between the detection structure (10) and the associated electronic circuit (12); wherein at least said first portion (20') is made of a flexible material.

5. The micro-electro-mechanical sensor according to claim 4, wherein said support (20) has an upper face (20a) and a lower face (20b), said lower face (20b) being configured to be coupled, at least partly in contact to said casing (2); wherein said die (11) is coupled, by means of a flip-chip coupling, to the lower face (20b) of the support (20), at the first portion (20'), with a corresponding rear face (11b) coupled, by means of an adhesive, to the casing (2) of the mechanical power transmission device (4); and wherein the electronic circuit (12) is coupled to the upper face (20a) of the support (20), at the second portion (20").

6. The micro-electro-mechanical sensor according to any one of the preceding claims, whose coupling, externally to the casing (2) of the mechanical power transmission device (4), does not have any invasive impact on the casing (2) and/or on the mechanical power transmission device (4).

7. The micro-electro-mechanical sensor according to any one of the preceding claims, wherein said electronic circuit (10) is configured to autonomously execute processing algorithms for monitoring the mechanical power transmission device (4), aimed at diagnostics and/or predictive prognostics based on the evolution over time of the detection signal (Sᵣ) and/or the output signal (Sₒᵤₜ).

8. The micro-electro-mechanical sensor according to claim 7, wherein said processing algorithms include artificial intelligence algorithms.

9. The micro-electro-mechanical sensor according to any one of the preceding claims, wherein said detection structure (10) defines a MEMS flexural resonator integrated in the die (11).

10. The micro-electro-mechanical sensor according to any one of the preceding claims, wherein said detection structure (10) is configured to detect deformations in the deformation range ε : 10⁻⁶ - 10⁻⁹.

11. A mechanical power transmission device (4) sensorized by means of the micro-electro-mechanical sensor (1) according to any one of the preceding claims.

12. Use of the micro-electro-mechanical sensor (1) according to any one of claims 1-10 to sensorize a mechanical power transmission device (4).
